# EUROPEAN PATENT SPECIFICATION

(11) **EP 2 547 043 B1**
(45) Date of publication and mention of the grant of the patent: **28.05.2014**
(21) Application number: 12175870.0
(22) Date of filing: 11.07.2012
(51) Int. Cl.: H04L 12/24, H04L 12/46

(54) **Method, apparatus and system for deploying layer 2 network device**
Verfahren, Vorrichtung und System zur initialen Konfiguration eines Layer 2 Netzwerkgerätes
Procédé, appareil et système pour un déploiement initial de réseau de couche 2

(30) Priority: 12.07.2011 WO PCT/CN2011/077084
(43) Date of publication of application: 16.01.2013
(73) Proprietor: Huawei Technologies Co., Ltd., Longgang District, Shenzhen Guangdong 518129 (CN)
(72) Inventor: Sun, Bing, Shenzhen, Guangdong 518129 (CN)
(74) Representative: Thun, Clemens

(56) References cited:
- US-A1- 2008 056 161
- US-A1- 2008 270 588
- US-B1- 7 844 766
- MAARTEN VISSERS ALCATEL SEL GERMANY: "ETH connection management alternatives and ETH OAM", ITU-T DRAFTS ; STUDY PERIOD 2005-2008, INTERNATIONAL TELECOMMUNICATION UNION, GENEVA ; CH, vol. Study Group 13 ; 5/13, 7 December 2004 (2004-12-07), pages 1-3, XP017518384, [retrieved on 2007-06-28]

## Description

### FIELD OF THE INVENTION

The present invention relates to the field of communications technologies, and in particular, to a method, apparatus, and system for deploying a Layer 2 network device.

### BACKGROUND OF THE INVENTION

Before actual application, a Layer 2 network device needs to be deployed. That is, after the Layer 2 network device is powered on, the configuration data needs to be obtained and configuration needs to be performed for the device. In a common deployment solution for Layer 2 network devices, before the Layer 2 network devices are transported to a site, the packed Layer 2 network devices are unpacked, and initial configuration is performed in a centralized manner for the devices. For example, each device is configured manually, or a local area network is formed using the Layer 2 network device and a configuration server, and configuration data is downloaded from the configuration server over the local area network. Because the initial configuration data is bounded to the installation location of the device, the configured Layer 2 network device is transported to a specific site for deployment according to its corresponding location.

In a deployment solution before the devices are transported, each one of all the devices obtains a temporary management Internet Protocol (IP ) address and a IP address of a Trivial File Transfer Protocol (TFTP) server from a Dynamic Host Configuration Protocol ( DHCP) server, and obtains configuration file from the TFTP server by using the temporary management IP address and performs configuration to ensure that the Layer 2 network device need no configuration after being transported to a specific site. The characteristic of the technical solution in the prior art lies in that before the Layer 2 network devices are transported to the installation side for deployment, the configuration data needs to be prepared in a centralized manner and be loaded to the devices.

The prior art is implemented as follows:
First, a DHCP+TFTP initial configuration channel is established based on the default virtual local area network (VLAN). Then, a DHCP server allocates a temporary management IP address for a Layer 2 network device. By using the temporary management IP address, the configuration file is obtained from the TFTP server. A management IP address and a management VLAN of the Layer 2 network device after deployment are obtained by enabling the configuration file. Generally, the configuration file can be enabled by restarting the device. Finally, after the configuration data is enabled, the device is performed operation, administration, and maintenance ( OAM) by the network side by using the management IP address and the management VLAN.

The VLAN of a Layer 2 network is categorized into a management VLAN and a service VLAN. The management VLAN is used to maintain and manage a Layer 2 network device, and the service VLAN is used to carry service data. In the two type of VLAN, packets are both transmitted in tagged mode. Before the Layer 2 network device obtains a management VLAN, the PVID (PORT VLAN ID, port VLAN ID) of an undeployed device is set to the default VLAN ID, for example, VLAN 1 to enable the Layer 2 network device can process untagged packets. In the case of the default VLAN, data is transmitted in untagged mode. Because untagged packets are generated considered to be unsecured packets, during formal network running after device deployment, the device is maintained and managed by using the obtained management VLAN. In this case, the untagged packets are also forbidden. The prior art is disadvantageous in that: Before transportation and deployment of a Layer 2 network device, initial data configuration in a centralized manner is required for the device. During the entire deployment, an extra unpacking operation on the device needs to be performed, which increases the deployment complexity, reduces the deployment efficiency, and increase the deployment time and costs. In addition, after initial configuration, the Layer 2 network device must be deployed at a specified site. If the device is deployed in an improper location, it may not run normally.

US 7,844,766 B1 discloses components for requesting a temporary IP address for a hot-swappable board, receiving the temporary IP address, assigning a management VLAN for management communications, receiving a management node IP address to communicate with a management node, and requesting a boot script from the management node using the management node IP address and the management VLAN.

Further, US 2008/056161 A1 discloses a ports configuration generation program defining a management VLAN to a new switch. The ports configuration generation program registers the management VLAN identifier in the VLAN definition information for the new switch among the VLAN definition information stored in a management server and allocates the VLANs that are newly defined in the new switch to ports that are identified by extracted port identifiers.

### SUMMARY OF THE INVENTION

Various embodiments of the present invention provide a method, apparatus, and system for deploying a network device to solve the problem that the efficiency of the deployment of a Layer 2 network device is low and the complexity thereof is high in the prior art.

In one aspect, an embodiment of the present invention provides a method for deploying an undeployed device in a Layer 2 network. The method includes: setting, by a deployment server, the port virtual local area network identifier PORT VLAN ID of a deployed device connected to the undeployed device to a management VLAN ID, where the deployed device is configured to tag, with the management VLAN ID, an untagged packet from the undeployed device by using the management VLAN ID, and provide the packet to the deployment server; based on a request from the undeployed device, providing, by the deployment server, a temporary management IP address for the undeployed device by passing through the deployed device so that the undeployed device establishes a default VLAN-based deployment maintenance channel based on the temporary management IP address; using, by the deployment server, the temporary management IP address to deliver corresponding configuration data to the undeployed device by passing through the deployed device so that the configuration data is enabled on the undeployed device; and delivering, by the deployment server, an instruction to the deployed device and the undeployed device to delete default VLAN configuration on the port of the undeployed device and management VLAN configuration on the port of the deployed device.

In another aspect, an embodiment of the present invention provides a deployment server for deploying an undeployed device in a Layer 2 network. The server includes: a setting unit, configured to set the port Virtual local area network identifier PORT VLAN ID of a deployed device connected to the undeployed device to a management VLAN ID, where the deployed device is configured to tag, with the management VLAN ID, an untagged packet from the undeployed device by using the management VLAN ID, and provide the packet to the deployment server; an IP address allocating unit, configured to, based on a request from the undeployed device, provide a temporary management IP address for the undeployed device by passing through the deployed device so that the undeployed device establishes a default VLAN-based deployment maintenance channel based on the temporary management IP address; a configuration data delivering unit, configured to use the temporary management IP address to deliver corresponding configuration data to the undeployed device by passing through the deployed device so that the configuration data is enabled on the undeployed device; and a port configuration deleting unit, configured to deliver an instruction to the deployed device and the undeployed device to delete default VLAN configuration on the port of the undeployed device and management VLAN configuration on the port of the deployed device.

In still another aspect, an embodiment of the present invention provides a system for deploying an undeployed device in a Layer 2 network, including: a deployment server, the undeployed device, and a deployed device; where the deployed device is connected to the undeployed device and is connected to the deployment server over the network; the deployment server is configured to set the port virtual local area network identifier PORT VLAN ID of a deployed device connected to an undeployed device to a management VLAN ID; based on a request from the undeployed device, provide a temporary management IP address for the undeployed device by passing through the deployed device; use the temporary management IP address to deliver corresponding configuration data to the undeployed device by passing through the deployed device; after the configuration data is enabled on the undeployed device, deliver an instruction to the deployed device and the undeployed device to delete default VLAN configuration on the port of the undeployed device and management VLAN configuration on the port of the deployed device; the deployed device is configured to tag, with the management VLAN ID, an untagged packet from the undeployed device by using the management VLAN ID, and provide the packet to the deployment server; and after the configuration data is enabled on the undeployed device, receive the instruction from the deployment server and delete the default VLAN configuration on the port; and the undeployed device is configured to obtain a temporary management IP address from the deployment server; establish a default VLAN-based deployment maintenance channel based on the temporary management IP address; use the temporary management IP address to obtain configuration data from the deployment server and enable the configuration data on the undeployed device; and after the configuration data is enabled, receive the instruction from the deployment server and delete the default VLAN configuration on its port.

The undeployed device is configured to obtain a temporary management IP address from the deployment server; establish a default VLAN-based deployment maintenance channel based on the temporary management IP address; use the temporary management IP address to obtain configuration data from the deployment server and enable the configuration data on the undeployed device; and after the configuration data is enabled, receive the instruction from the deployment server and delete the default VLAN configuration on its port.

According the embodiments of the present invention, the undeployed device establishes the temporary deployment maintenance channel based on the default VLAN, the PVID of the port of the upper layer network device connected to the undeployed device is configured to the management VLAN ID, which implements a smooth handover from the default VLAN-based deployment maintenance channel to the management VLAN-based true network management channel for the undeployed device. This implements centralized data configuration after the Layer 2 devices are transported to the site. Before transportation, the network devices do not need to be unpacked for data configuration, which improves the deployment efficiency.

### BRIEF DESCRIPTION OF THE DRAWINGS

FIG. 1 is a schematic network topology of a method for deploying a Layer network device according to an embodiment of the present invention;
FIG. 2 is a flowchart of a method for deploying a Layer network device according to an embodiment of the present invention;
FIG. 3 is a flowchart of generating configuration data corresponding to an undeployed device 30 on a deployment server 10;
FIG. 4 is a schematic diagram of the flowchart illustrated in FIG. 3;
FIG. 5 is a functional block diagram of a deployment server for a Layer network device according to an embodiment of the present invention; and
FIG. 6 is a detailed functional block diagram of a configuration data generating unit according to an embodiment of the present invention.

### DETAILED DESCRIPTION OF THE EMBODIMENTS

The objective, technical solutions, and beneficial effects of the embodiments of the present invention are described clearly and completely with reference to the accompanying drawings. Evidently, the embodiments are exemplary only, without covering all embodiments of the present invention. A person skilled in the art can derive other embodiments from the embodiments given herein without making any creative effort, and all such embodiments are covered in the protection scope of the present invention.

The technical solutions provided in the embodiments of the present invention, once-on-site deployment can be implemented for a Layer 2 network device without being unpacked for data configuration during the whole process from device purchase and shipping to transportation and installation; in addition, a deployment maintenance channel of an undeployed network device can be end-to-end got through based on the management VLAN of the Layer 2 network, so that the deployment maintenance channel is handed over to the formal management channel smoothly. According to the embodiments of the present invention, a Layer 2 network device for which deployment is not implemented, that is, the Layer 2 network device that does not use the management IP address and the management VLAN to receive formal network management is called an undeployed device; a Layer 2 network device for which deployment is implemented, that is, the Layer 2 network device that uses the management IP address and the management VLAN to be managed by formal network is called a deployed device; a deployed device connected to an undeployed device is called an upper layer network device of the undeployed device; and a device that provides configuration data for Layer 2 network devices is called a deployment server. The deployment server according to the embodiments of the present invention may include a DHCP server and a TFTP server. These two servers may be either independent entities or integrated in the same physical entity.

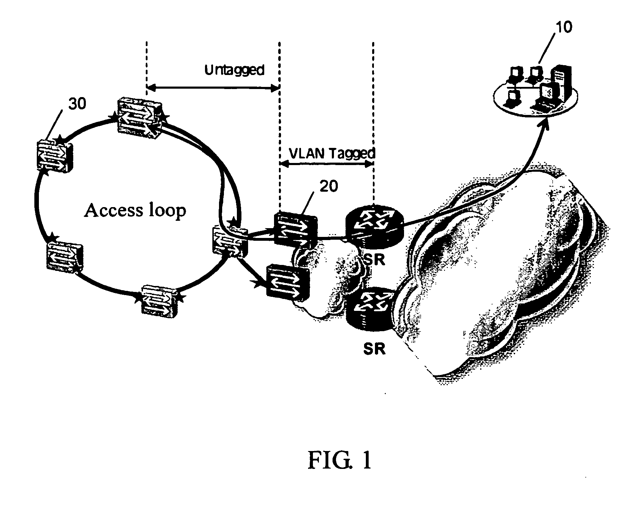

FIG. 1 is a schematic network topology of a method for deploying a Layer 2 network device according to an embodiment of the present invention. As shown in FIG. 1, multiple undeployed devices 30 form an access loop, and an undeployed device 30 is connected to a deployment server 10 by using an upper layer network device 20, and obtains configuration data from the deployment server to complete its configuration. Specifically, the undeployed device 30 obtains a temporary management IP address from a DHCP server of the deployment server10 through the DHCP protocol, establishes a default VLAN-based deployment maintenance channel based on the temporary management IP address, obtains the configuration data from a TFTP server of the deployment server 10 through the deployment maintenance channel, and enables the configuration data on the Layer 2 network device.

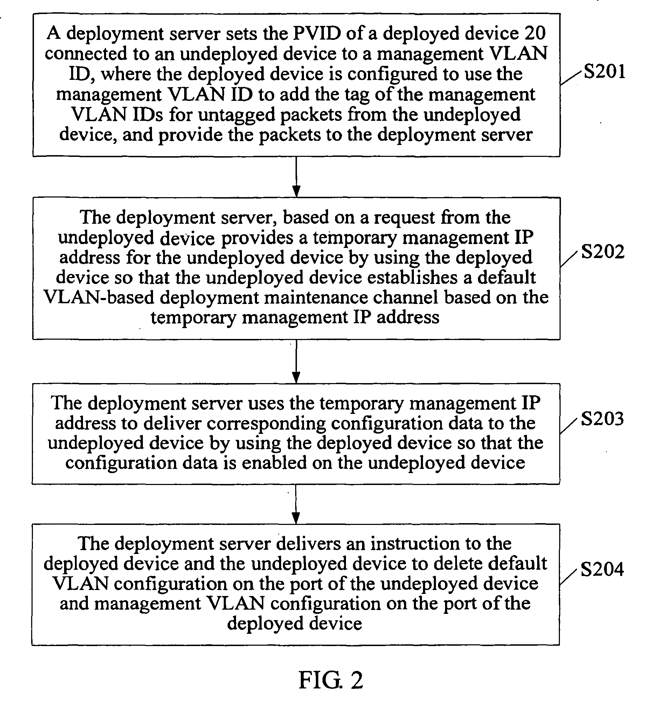

Corresponding to the network topology illustrated in FIG. 1, embodiments of the present invention first provide a method for deploying a Layer 2 network device. As shown in FIG. 2, the method includes:
S201. A deployment server 10 sets a PVID of a deployed device 20 connected to an undeployed device 30 to a management VLAN ID, where the deployed device 20 is configured to tag, with the management VLAN ID, an untagged packet from the undeployed device 30 by using the management VLAN ID, and provide the packet to the deployment server 10.

Specifically, the deployment server delivers an instruction to set the PVID of the access port of the deployed device connected to the undeployed device to the management VLAN ID of a Layer 2 network. This is to tag the untagged packet from the undeployed device with the management VLAN tag and convert the packet into a tagged packet. The tagged packet can be transmitted over an official operator network so that the configuration data can be obtained from the deployment server.
S202. The deployment server 10, based on a request from the undeployed device 30, provides a temporary management IP address for the undeployed device 30 via the deployed device 20 so that the undeployed device 30 establishes a default VLAN-based deployment maintenance channel based on the temporary management IP address.

After receiving the untagged packet from the undeployed device 30, the deployed device 20 tags the untagged packet with the management VLAN tag to convert the packet into a tagged packet so that the packet successfully arrives at the deployment server 10. After being installed on site and powered on, the undeployed device 30 obtains the temporary management IP address from the deployment server 10 through the DHCP protocol and sets the temporary management IP address on a Layer 3 default vlan interface.
S203. The deployment server 10 uses the temporary management IP address to deliver corresponding configuration data to the undeployed device 30 via the deployed device 20 so that the configuration data is enabled on the undeployed device 30.

After receiving the configuration data in the format of a tagged packet delivered by the deployment server 10, the deployed device 20 converts the configuration data into the configuration data in the format of an untagged packet and send the data to the undeployed device 30. The undeployed device 30 obtains device configuration data from the deployment server 10 by using the temporary IP address and the default VLAN and enables the new configuration data; meanwhile, the default VLAN configuration is maintained on all ports of the undeployed device 30 so that the undeployed device 30 can receive and deliver the untagged packet carrying no VLAN tag.
S204. The deployment server delivers an instruction to the deployed device and the undeployed device to delete default VLAN configuration on the port of the undeployed device and management VLAN configuration on the port of the deployed device.

In the embodiments of the present invention, after the configuration data is loaded and is enabled, for network security, the untagged packet is not permitted to be transmitted between devices. After a new device is deployed successfully, the configuration "PVID = default VLAN ID" needs to be deleted from its port, and the configuration "PVID = management VLAN ID" needs to be deleted from the cascading port of its upper layer device.

The deployment server 10 delivers an instruction for deleting the PVID configuration from the port of the undeployed device. After the old configuration "PVID = default VLAN" is deleted from the port, the configuration data is enabled on the undeployed device and a formal management channel is established, and management and maintenance are performed by the maintenance personnel or the network management system based on the management IP address of the management VLAN and the tagged packet. In this case, the undeployed device is upgraded and therefore becomes a deployed device.

In a first optional mode, the deployment server according to this embodiment delivers a periodic deletion instruction to the undeployed device 30 and the deployed device 20 connected to the undeployed device 30 to instruct the undeployed device 30 and the deployed device 20 deletes their PVID configuration simultaneously when preset time arrives. This prevents the case that a untagged packet is allowed to be transmitted over the network in the time difference caused by the difference in deletion time.

In a second optional mode, according to this embodiment, the undeployed device 30 may delete its PVID configuration and then the deployed device 20 deletes its PVID configuration. This prevents the case that the network management device cannot manage the undeployed device 20 after the deployed device 20 deletes its PVID configuration.

Using the second optional mode as an example, the process of deleting the configuration includes the following steps:
Step 1: A deployment server delivers instructions in batches to undeployed devices to instruct the undeployed devices to periodically delete the PVID configurations on the ports (the period is configurable).
Step 2: After receiving the instructions for periodically deleting the PVID configuration, the undeployed devices start timers, and prepare to delete the configuration "PVID = default VLAN" on their ports, and record the current states (states of periodically deleting the PVID).
Step 3: The deployment server queries PVID states of the ports of the undeployed devices to determine whether they are all in the periodic deletion state. In this step, every undeployed device needs to be in the periodic deletion state; if there is any one of the undeployed devices that is not in the periodic deletion state, instructions for periodically deleting the PVID configurations on the ports need to be delivered again. In this way, when the specified time arrives, the PVID configuration on these undeployed devices is deleted simultaneously.
Step 4: After the PVID configuration on every undeployed device is deleted, the deployment server 10 delivers an instruction to the deployed device 20 to instruct the deployed device to delete the configuration "PVID = management VLAN" on the access cascading interface. In this way, all the new deployed devices can be managed and maintained in the management VLAN in the Layer 2 network, implementing a centralized and smooth handover between the deployment channel and management channel.

According to the method for deploying a Layer 2 network device provided in the embodiment of the present invention, the undeployed device establishes the temporary deployment maintenance channel based on the default VLAN; the deployment server sets the PVID of the access port of the upper layer network device connected to the undeployed device to the management VLAN ID, which implements a smooth handover from the default VLAN-based deployment maintenance channel to the management VLAN-based true network management channel for the undeployed device; and finally, after the Layer 2 network device is deployed, the PVIDs of the undeployed device and its upper layer device are deleted, the formal management channel is established after the configuration data is enabled on the undeployed device, and management and maintenance are performed by the maintenance personnel or network management system based on the management IP address of the management VLAN and the interaction of the tagged packet. In this case, the undeployed device is upgraded to a deployed device. The method according to the embodiment of the present invention can implement centralized data configuration after the Layer 2 network devices are transported to the site. Before transportation, the network devices do not need to be opened for data configuration, which improves the deployment efficiency.

In the embodiment of the present invention, before the deployment server 10 delivers the corresponding configuration data, the method for deploying a Layer 2 network device further includes: generating configuration data corresponding to the undeployed device 30 on the deployment server 10.

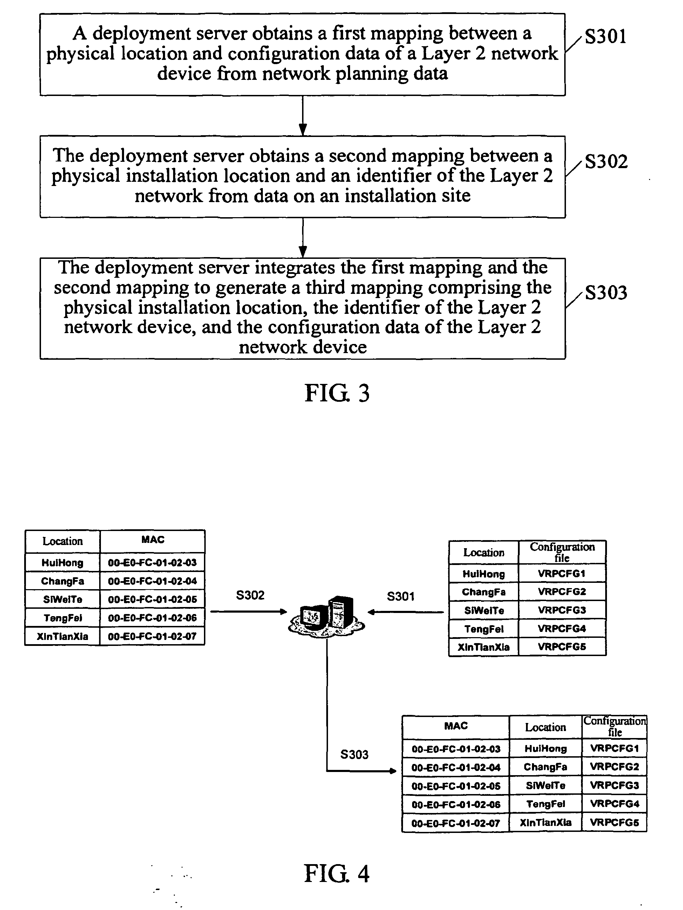

FIG. 3 is a flowchart of generating, on a deployment server 10, configuration data corresponding to an undeployed device 30. FIG. 4 is a schematic diagram of the flowchart illustrated in FIG. 3. As shown in FIG. 3, the procedure specifically includes the following steps:
S301. The deployment server obtains a first mapping between a physical location and configuration data of a Layer 2 network device from network planning data.

The network planning data includes: the physical location of installation, management IP address, management VLAN, and service VLAN of the Layer 2 network device.

First, the deployment server provides a script converting tool, which is capable of converting the network planning data, for example, an Excel, into the device configure script. Then, the deployment server performs, for the device, offline data configuration, including network data configuration, such as service VLAN configuration, Layer 2 interface configuration and Layer 3 interface configuration, and QoS configuration; and device data, such as a management IP address, a management VLAN, and an SNMP parameter, configuration; and determines a first mapping between the configuration data of the device and a deployment location.
S302. The deployment server 10 obtains a second mapping between the physical location of installation and the identifier of the Layer 2 network device from data on an installation site.

The data on the installation side mainly includes a physical location of installation and a device ID. Through a user interface provided by the deployment server, the installation engineers on the installation side provide the physical location of installation and the device ID to the deployment server.

Optionally, the identifier of the Layer 2 network device is the media access control (English: media access control, MAC) address of the Layer 2 network device.
S303. The deployment server 10 integrates the first mapping and the second mapping to generate a third mapping comprising the physical location of installation, the identifier of the Layer 2 network device, and the configuration data of the Layer 2 network device.

According to the method shown in FIG. 3, when performing offline data configuration for the Layer 2 network deice, the deployment server plans only the configuration data based on the physical location, and determines a first mapping between the deployment location and the device configuration data such as the management IP address, management VLAN, SNMP parameter. The deployment location and the device ID are not bound or associated at the offline data configuration phase. That is, the technical solution does not need to limit the deployment location of the Layer 2 network device. This separates data planning from processes of device transportation and device installation. In this way, the device can be transported and installed even when the deployment location is not determined and these processes can be performed concurrently to improve the device deployment efficiency. This prevents the problem that the device cannot work properly due to an incorrect deployment location, and reduces the probability of incorrect configuration.

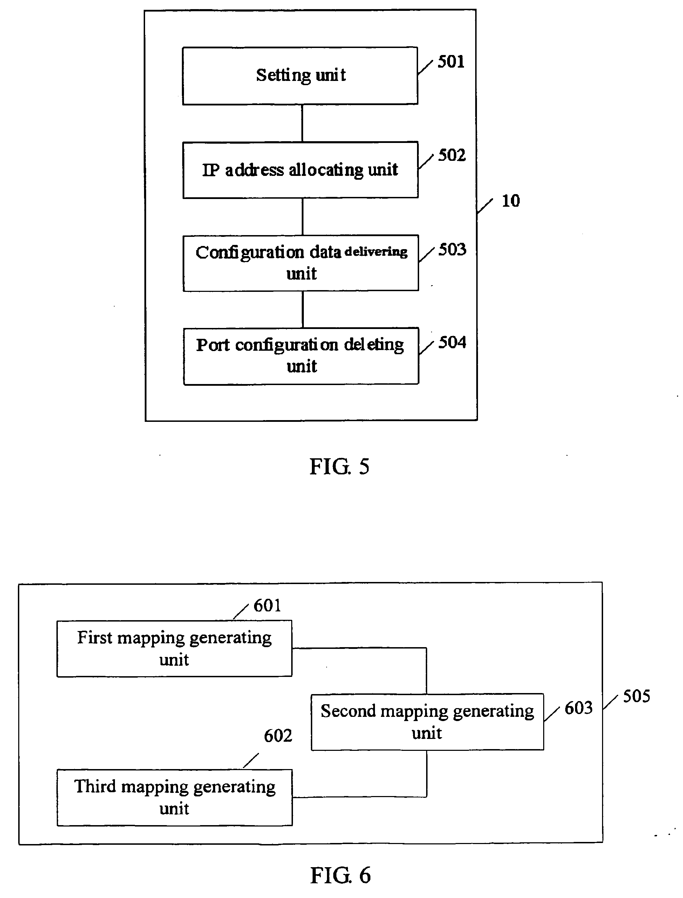

Corresponding to the method described in the above embodiments, an embodiment of the present invention provides a deployment server for a Layer 2 network device. FIG. 5 is a functional block diagram of a deployment server for a Layer 2 network device according to an embodiment of the present invention. As shown in FIG. 5, the deployment server 10 includes:
a setting unit 501, configured to set a port virtual local area network identifier PORT VLAN ID of a deployed device connected to an undeployed device to a management VLAN ID, where the deployed device is configured to tag, with the management VLAN ID, an untagged packet from the undeployed device by using the management VLAN ID, and provide the packet to the deployment server; an IP address allocating unit 502, configured to: based on a request from the undeployed device, provide a temporary management IP address for the undeployed device by passing through the deployed device so that the undeployed device establishes a default VLAN-based deployment maintenance channel based on the temporary management IP address; a configuration data delivering unit 503, configured to use the temporary management IP address to deliver corresponding configuration data to the undeployed device by passing through the deployed device so that the configuration data is enabled on the undeployed device; and a port configuration deleting unit 504, configured to deliver an instruction to the deployed device and the undeployed device to delete default VLAN configuration on a port of the undeployed device and management VLAN configuration on a port of the deployed device.

Alternatively, the server further includes a configuration data generating unit 505, configured to generate, on the deployment server, configuration data corresponding to the undeployed device.

FIG. 6 is a detailed functional block diagram of a configuration data generating unit according to an embodiment of the present invention. As shown in FIG. 6, the configuration data generating unit 505 according to this embodiment includes:
a first mapping generating unit 601, configured to obtain a first mapping between a physical location and configuration data of the Layer 2 network device from network planning data; a second mapping generating unit 602, configured to obtain a second mapping between a physical location of installation and an identifier of the Layer 2 network device from data on an installation site; and a third mapping generating unit 603, configured to integrate the first mapping and the second mapping to generate a third mapping including the physical location of installation, the identifier of the Layer 2 network device, and the configuration data of the Layer 2 network device.

Alternatively, the port configuration deleting unit 504 is configured to deliver a periodic deletion instruction to the undeployed device and the deployed device to instruct the undeployed device to delete the default VLAN configuration on its port when preset time arrives, and to delete the management VLAN configuration on its port when the preset time arrives.

Alternatively, the IP address allocation unit is a DHCP server, and the configuration data delivering unit is a TFTP server.

Corresponding to the method and apparatus described in the above embodiments, an embodiment of the present invention provides a system for deploying a Layer 2 network device. Referring to FIG. 1 again, the system according to the embodiment includes a deployment server 10, an undeployed device 30, and a deployed device 30. The deployed device 20 is connected to the undeployed device 30 and is connected to the deployment server 10 over the network.

The deployment server 10 is configured to set the port virtual local area network identifier PORT VLAN ID of a deployed device connected to an undeployed device to a management VLAN ID; based on a request from the undeployed device, provide a temporary management IP address for the undeployed device by passing through the deployed device; use the temporary management IP address to deliver corresponding configuration data to the undeployed device by passing through the deployed device; after the configuration data is enabled on the undeployed device, deliver an instruction to the deployed device and the undeployed device to delete default VLAN configuration on the port of the undeployed device and management VLAN configuration on the port of the deployed device.

Alternatively, the deployment server is configured to deliver a periodic deletion instruction to the undeployed device and the deployed device to instruct the undeployed device to delete the default VLAN configuration on its port when preset time arrives, and to delete the management VLAN configuration on its port when the preset time arrives.

Alternatively, the deployment server is further configured to generate configuration data corresponding to the undeployed device. Specifically, the deployment server is configured to obtain a first mapping between a physical location and the configuration data of the Layer 2 network device from network planning data; obtain a second mapping between a physical location of installation and an identifier of the Layer 2 network device from data on an installation site; and integrate the first mapping and the second mapping to generate a third mapping comprising the physical location of installation, the identifier of the Layer 2 network device, and the configuration data of the Layer 2 network device.

The deployed device 20 is configured to tag, with the management VLAN ID, an untagged packet from the undeployed device by using the management VLAN ID, and provide the packet to the deployment server; and after the configuration data is enabled on the undeployed device, receive the instruction from the deployment server and delete the default VLAN configuration on the port.

The undeployed device 30 is configured to obtain a temporary management IP address from the deployment server; establish a default VLAN-based deployment maintenance channel based on the temporary management IP address; use the temporary management IP address to obtain configuration data from the deployment server and enable the configuration data on the undeployed device; and after the configuration data is enabled, receive the instruction from the deployment server and delete the default VLAN configuration on its port.

The technical solutions of the present invention have the following beneficial effects:
(1) Before installation of the Layer 2 network device, opening and preconfiguration are not required, and an installation location of the device does not need to plan in advance. After the device is transported to the installation site, it can be deployed at will and empty-configuration start and plug and play for the device can be really achieved.
(2) The device configuration data is planned only based on the physical location, and device data and a device entity (device ID parameter such as an IP address or a MAC address) are not bound and associated at the planning phase. This separates data planning and processes of device transportation and device installation, and these processes can be performed concurrently, so that the device deployment efficiency is improved.
(3) Installation engineers do not need to go to the site for operations. All configuration data of the network device is delivered in a centralized manner after installation. After multiple devices are deployed and powered on, version files and configuration data can be automatically obtained in batches, which reduce deployment costs.

A person skilled in the art may understand that all or part of steps according to the embodiments of the present invention may be implemented by a program instructing relevant hardware. The programs may be stored in a computer readable storage medium. When the programs are executed, the steps of the method in the embodiment are executed. The storage medium includes various mediums, such as a read-only memory (ROM), a random access memory (RAM), a magnetic disk or an optical disc, which can store program code.

In conclusion, described above are only exemplary embodiments of the present invention. The scope of the present invention is not limited such embodiments. Variations or replacements readily apparent to a person skilled in the art within the technical scope of the present invention should fall within the protection scope of the present invention. Therefore, the protection scope of the present invention is subjected to the appended claims.

## Claims

1. A method for deploying an undeployed device (30) in a Layer 2 network comprising:
setting (S201), by a deployment server (10), a port virtual local area network identifier, VLAN ID, of a deployed device (20) connected to the undeployed device (30) to a management VLAN ID, wherein the deployed device (20) is configured to tag, with the management VLAN ID, an untagged packet from the undeployed device (30) by using the management VLAN ID, and provide the packet to the deployment server (10);
based on a request from the undeployed device (30), providing (S202), by the deployment server (10), a temporary management IP address for the undeployed device (30) by passing through the deployed device (20) so that the undeployed device (30) establishes a default VLAN-based deployment maintenance channel based on the temporary management IP address;
using (S203), by the deployment server (10), the temporary management Internet Protocol, IP, address to deliver corresponding configuration data to the undeployed (30) device by passing through the deployed device (20) so that the configuration data is enabled on the undeployed device (30); and
delivering (S204), by the deployment server (10), an instruction to the deployed device (20) and the undeployed device (30) to delete default VLAN configuration on a port of the undeployed device (30) and management VLAN configuration on a port of the deployed device (20).

2. The method according to claim 1, further comprising: generating, on the deployment server (10), configuration data corresponding to the undeployed device (30).

3. The method according to claim 2, wherein the generating, on the deployment server (10), configuration data corresponding to the undeployed device (30) comprises:
obtaining (S301), by the deployment server (10), a first mapping between a physical location and configuration data of the undeployed device (30) from network planning data;
obtaining (S302), by the deployment server (10), a second mapping between a physical location of installation and an identifier of the undeployed device (30) from data on an installation site; and
integrating (S303), by the deployment server (10), the first mapping and the second mapping to generate a third mapping comprising the physical location of installation, the identifier of the undeployed device (30), and the configuration data of the undeployed device (30).

4. The method according to any one of claims 1 to 3, wherein the delivering (S204), by the deployment server (10), an instruction to the deployed device (20) and the undeployed device (30) to delete default VLAN configuration on a port of the undeployed device (30) and management VLAN configuration on a port of the deployed device (20) comprises:
delivering, by the deployment server (10), a periodic deletion instruction to instruct the undeployed device (30) and the deployed device (20) to delete simultaneously the default VLAN configuration on the port of the undeployed device and the management VLAN configuration on the port of the deployed device when a preset time arrives.

5. A deployment server (10) for deploying an undeployed device (30) in a Layer 2 network, comprising:
a setting unit (501), configured to set a port virtual local area network identifier, VLAN ID, of a deployed device (20) connected to the undeployed device (30) to a management VLAN ID, wherein the deployed device (20) is configured to tag, with the management VLAN ID, an untagged packet from the undeployed device (30) by using the management VLAN ID, and provide the packet to the deployment server (10);
an IP address allocating unit (502), configured to: based on a request from the undeployed device (30), provide a temporary management IP address for the undeployed device (30) by passing through the deployed device (20) so that the undeployed device (30) establishes a default VLAN-based deployment maintenance channel based on the temporary management Internet Protocol, IP, address;
a configuration data delivering unit (503), configured to use the temporary management IP address to deliver corresponding configuration data to the undeployed device (30) by passing through the deployed device (20) so that the configuration data is enabled on the undeployed device (30); and
a port configuration deleting unit (504), configured to deliver an instruction to the deployed device (20) and the undeployed device (30) to delete default VLAN configuration on a port of the undeployed device (30) and management VLAN configuration on a port of the deployed device (20).

6. The deployment server according to claim 5, further comprising:
a configuration data generating unit (505), configured to generate, on the deployment server (10), configuration data corresponding to the undeployed device (30).

7. The deployment server according to claim 6, wherein the configuration data generating unit (505) comprises:
a first mapping generating unit (601), configured to obtain a first mapping between a physical location and configuration data of the undeployed device (30) from network planning data;
a second mapping generating unit (603), configured to obtain a second mapping between a physical location of installation and an identifier of the undeployed device (30) from data on an installation site; and
a third mapping generating unit (602), configured to integrate the first mapping and the second mapping to generate a third mapping comprising the physical location of installation, the identifier of the undeployed device (30), and the configuration data of the undeployed device (30).

8. The deployment server according to any one of claims 5 to 7, wherein:
the port configuration deleting unit (504) is configured to deliver a periodic deletion instruction to the undeployed device (30) and the deployed device (20) to instruct the undeployed device (30) and the deployed device (20) to delete simultaneously the default VLAN configuration on the port of the undeployed device and the management VLAN configuration on the port of the deployed device when a preset time arrives.

9. The deployment server according to claim 5, wherein:
the IP address allocation unit (502) is a DHCP server, and the configuration data delivering unit (503) is a TFTP server.

10. A system for deploying an undeployed device (30) in a Layer 2 network, comprising: a deployment server (10), the undeployed device (30), and a deployed device (20); wherein the deployed device (20) is connected to the undeployed device (30) and is connected to the deployment server (10) over a network;
the deployment server (10) is configured to set a port virtual local area network identifier, VLAN ID, of the deployed device (20) connected to the undeployed device (30) to a management VLAN ID; based on a request from the undeployed device (30), provide a temporary management Internet Protocol, IP, address for the undeployed device (30) by passing through the deployed device (20); use the temporary management IP address to deliver corresponding configuration data to the undeployed device (30) by passing through the deployed device (20); after the configuration data is enabled on the undeployed device (30), deliver an instruction to the deployed device (20) and the undeployed device (30) to delete default VLAN configuration on a port of the undeployed device (30) and management VLAN configuration on a port of the deployed device (20);
the deployed device (20) is configured to tag, with the management VLAN ID, an untagged packet from the undeployed device (30) by using the management VLAN ID, and provide the packet to the deployment server (10); and after the configuration data is enabled on the undeployed device (30), receive the instruction from the deployment server (10) and delete the default VLAN configuration on the port; and
the undeployed device (30) is configured to obtain the temporary management IP address from the deployment server (10); establish a default VLAN-based deployment maintenance channel based on the temporary management IP address; use the temporary management IP address to obtain the configuration data from the deployment server (10) and enable the configuration data on the undeployed device (30); and after the configuration data is enabled, receive the instruction from the deployment server (10) and delete the default VLAN configuration on its port.

11. The system according to claim 10, wherein
the deployment server (10) is further configured to generate configuration data corresponding to the undeployed device (30).

12. The system according to claim 11, wherein
the deployment server (10) is configured to obtain a first mapping between a physical location and configuration data of the undeployed device (30) from network planning data; obtain a second mapping between a physical location of installation and an identifier of the undeployed device (30) from data on an installation site; and integrate the first mapping and the second mapping to generate a third mapping comprising the physical location of installation, the identifier of the undeployed device (30), and the configuration data of the undeployed device (30).

13. The system according to any one of claims 10 to 12, wherein
the deployment server (10) is configured to deliver a periodic deletion instruction to the undeployed device (30) and the deployed device (20) to instruct the undeployed device (30) and the deployed device (20) to delete simultaneously the default VLAN configuration on the port of the undeployed device and the management VLAN configuration on the port of the deployed device when a preset time arrives.

## Patentansprüche

1. Verfahren zum Einsetzen einer nicht eingesetzten Vorrichtung (30) in einem Schicht-2-Netz, das Folgendes umfasst:
Einstellen (S201) einer Port-Kennung eines virtuellen lokalen Netzes, VLAN-ID, einer eingesetzten Vorrichtung (20), die mit der nicht eingesetzten Vorrichtung (30) verbunden ist, auf eine Management-VLAN-ID durch einen Einsatzserver (10), wobei die eingesetzte Vorrichtung (20) konfiguriert ist, ein unetikettiertes Paket aus der nicht eingesetzten Vorrichtung (30) mit der Management-VLAN-ID unter Verwendung der Management-VLAN-ID zu etikettieren und das Paket dem Einsatzserver (10) zur Verfügung zu stellen;
basierend auf einer Anforderung von der nicht eingesetzten Vorrichtung (30) Bereitstellen (S202) durch den Einsatzserver (10) einer temporären Management-IP-Adresse für die nicht eingesetzte Vorrichtung (30) durch Hindurchgehen durch die eingesetzte Vorrichtung (20), so dass die nicht eingesetzte Vorrichtung (30) einen auf Standard-VLAN basierenden Einsatzwartungskanal basierend auf der temporären Management-IP-Adresse aufbaut;
Verwenden (S203) der temporären Management-Internetprotokoll-Adresse, Management-IP-Adresse, durch den Einsatzserver (10), um entsprechende Konfigurationsdaten zu der nicht eingesetzten Vorrichtung (30) durch Hindurchgehen durch die eingesetzte Vorrichtung (20) zu liefern, so dass die Konfigurationsdaten auf der nicht eingesetzten Vorrichtung (30) aktiviert werden; und
Liefern (S204) einer Anweisung zu der eingesetzten Vorrichtung (20) und der nicht eingesetzten Vorrichtung (30) durch den Einsatzserver (10), die Standard-VLAN-Konfiguration auf einem Port der nicht eingesetzten Vorrichtung (30) und die Management-VLAN-Konfiguration auf einem Port der eingesetzten Vorrichtung (20) zu löschen.

2. Verfahren nach Anspruch 1, das ferner Folgendes umfasst: Erzeugen von Konfigurationsdaten, die der nicht eingesetzten Vorrichtung (30) entsprechen, auf dem Einsatzserver (10).

3. Verfahren nach Anspruch 2, wobei das Erzeugen von Konfigurationsdaten, die der nicht eingesetzten Vorrichtung (30) entsprechen, auf dem Einsatzserver (10) Folgendes umfasst:
Erhalten (S301) einer ersten Zuordnung zwischen einem physikalischen Ort und Konfigurationsdaten der nicht eingesetzten Vorrichtung (30) aus Netzplanungsdaten durch den Einsatzserver (10);
Erhalten (S302) einer zweiten Zuordnung zwischen einem physikalischen Einsatzort und einer Kennung der nicht eingesetzten Vorrichtung (30) aus Daten auf einem Einsatzstandort durch den Einsatzserver (10); und
Integrieren (S303) der ersten Zuordnung und der zweiten Zuordnung durch den Einsatzserver (10), um eine dritte Zuordnung zu erzeugen, die den physikalischen Einsatzort, die Kennung der nicht eingesetzten Vorrichtung (30) und die Konfigurationsdaten der nicht eingesetzten Vorrichtung (30) umfasst.

4. Verfahren nach einem der Ansprüche 1 bis 3, wobei das Liefern (S204) einer Anweisung zu der eingesetzten Vorrichtung (20) und der nicht eingesetzten Vorrichtung (30) durch den Einsatzserver (10), die Standard-VLAN-Konfiguration auf einem Port der nicht eingesetzten Vorrichtung (30) und die Management-VLAN-Konfiguration auf einem Port der eingesetzten Vorrichtung (20) zu löschen, Folgendes umfasst:
Liefern einer periodischen Löschanweisung durch den Einsatzserver (10), um die nicht eingesetzte Vorrichtung (30) und die eingesetzte Vorrichtung (20) anzuweisen, gleichzeitig die Standard-VLAN-Konfiguration auf dem Port der nicht eingesetzten Vorrichtung und die Management-VLAN-Konfiguration auf dem Port der eingesetzten Vorrichtung zu löschen, wenn eine voreingestellte Zeit erreicht ist.

5. Einsatzserver (10) zum Einsetzen einer nicht eingesetzten Vorrichtung (30) in einem Schicht-2-Netz, der Folgendes umfasst:
eine Einstelleinheit (501), die konfiguriert ist, eine Port-Kennung eines virtuellen lokalen Netzes, VLAN-ID, einer eingesetzten Vorrichtung (20), die mit der nicht eingesetzten Vorrichtung (30) verbunden ist, auf eine Management-VLAN-ID einzustellen, wobei die eingesetzte Vorrichtung (20) konfiguriert ist, ein unetikettiertes Paket aus der nicht eingesetzten Vorrichtung (30) mit der Management-VLAN-ID unter Verwendung der Management-VLAN-ID zu etikettieren und das Paket dem Einsatzserver (10) zur Verfügung zu stellen;
eine IP-Adressen-Zuweisungseinheit (502), die konfiguriert ist: basierend auf einer Anforderung von der nicht eingesetzten Vorrichtung (30) eine temporäre Management-IP-Adresse für die nicht eingesetzte Vorrichtung (30) durch Hindurchgehen durch die eingesetzte Vorrichtung (20) bereitzustellen, so dass die nicht eingesetzte Vorrichtung (30) einen auf Standard-VLAN basierenden Einsatzwartungskanal basierend auf der temporären Management-Internetprotokoll-Adresse, Management-IP-Adresse, aufbaut;
eine Konfigurationsdatenliefereinheit (503), die konfiguriert ist, die temporäre Management-IP-Adresse zu verwenden, um entsprechende Konfigurationsdaten zu der nicht eingesetzten Vorrichtung (30) durch Hindurchgehen durch die eingesetzte Vorrichtung (20) zu liefern, so dass die Konfigurationsdaten auf der nicht eingesetzten Vorrichtung (30) aktiviert werden; und
eine Port-Konfigurationslöscheinheit (504), die konfiguriert ist, eine Anweisung zu der eingesetzten Vorrichtung (20) und der nicht eingesetzten Vorrichtung (30) zu liefern, die Standard-VLAN-Konfiguration auf einem Port der nicht eingesetzten Vorrichtung (30) und die Management-VLAN-Konfiguration auf einem Port der eingesetzten Vorrichtung (20) zu löschen.

6. Einsatzserver nach Anspruch 5, der ferner Folgendes umfasst:
eine Konfigurationsdatenerzeugungseinheit (505), die konfiguriert ist, auf dem Einsatzserver (10) Konfigurationsdaten, die der nicht eingesetzten Vorrichtung (30) entsprechen, zu erzeugen.

7. Einsatzserver nach Anspruch 6, wobei die Konfigurationsdatenerzeugungseinheit (505) Folgendes umfasst:
eine erste Zuordnungserzeugungseinheit (601), die konfiguriert ist, eine erste Zuordnung zwischen einem physikalischen Ort und Konfigurationsdaten der nicht eingesetzten Vorrichtung (30) aus Netzplanungsdaten zu erhalten;
eine zweite Zuordnungserzeugungseinheit (603), die konfiguriert ist, eine zweite Zuordnung zwischen einem physikalischen Einsatzort und einer Kennung der nicht eingesetzten Vorrichtung (30) aus Daten auf einem Einsatzstandort zu erhalten; und
eine dritte Zuordnungserzeugungseinheit (602), die konfiguriert ist, die erste Zuordnung und die zweite Zuordnung zu integrieren, um eine dritte Zuordnung zu erzeugen, die den physikalischen Einsatzort, die Kennung der nicht eingesetzten Vorrichtung (30) und die Konfigurationsdaten der nicht eingesetzten Vorrichtung (30) umfasst.

8. Einsatzserver nach einem der Ansprüche 5 bis 7, wobei:
die Port-Konfigurationslöscheinheit (504) konfiguriert ist, eine periodische Löschanweisung zu der nicht eingesetzten Vorrichtung (30) und der eingesetzten Vorrichtung (20) zu liefern, um die nicht eingesetzte Vorrichtung (30) und die eingesetzte Vorrichtung (20) anzuweisen, gleichzeitig die Standard-VLAN-Konfiguration auf dem Port der nicht eingesetzten Vorrichtung und die Management-VLAN-Konfiguration auf dem Port der eingesetzten Vorrichtung zu löschen, wenn eine voreingestellte Zeit erreicht ist.

9. Einsatzserver nach Anspruch 5, wobei:
die IP-Adressen-Zuweisungseinheit (502) ein DHCP-Server ist und die Konfigurationsdatenliefereinheit (503) ein TFTP-Server ist.

10. System zum Einsetzen einer nicht eingesetzten Vorrichtung (30) in einem Schicht-2-Netz, das Folgendes umfasst: einen Einsatzserver (10), die nicht eingesetzte Vorrichtung (30) und eine eingesetzte Vorrichtung (20); wobei die eingesetzte Vorrichtung (20) mit der nicht eingesetzten Vorrichtung (30) verbunden ist und mit dem Einsatzserver (10) über ein Netz verbunden ist;
der Einsatzserver (10) konfiguriert ist, eine Port-Kennung eines virtuellen lokalen Netzes, VLAN-ID, der eingesetzten Vorrichtung (20), die mit der nicht eingesetzten Vorrichtung (30) verbunden ist, auf eine Management-VLAN-ID einzustellen; basierend auf einer Anforderung von der nicht eingesetzten Vorrichtung (30) eine temporäre Management-Internetprotokoll-Adresse, Management-IP-Adresse, für die nicht eingesetzte Vorrichtung (30) durch Hindurchgehen durch die eingesetzte Vorrichtung (20) bereitzustellen; die temporäre Management-IP-Adresse zu verwenden, um entsprechende Konfigurationsdaten zu der nicht eingesetzten Vorrichtung (30) durch Hindurchgehen durch die eingesetzte Vorrichtung (20) zu liefern; nachdem die Konfigurationsdaten auf der nicht eingesetzten Vorrichtung (30) aktiviert sind, eine Anweisung zu der eingesetzten Vorrichtung (20) und der nicht eingesetzten Vorrichtung (30) zu liefern, die Standard-VLAN-Konfiguration auf einem Port der nicht eingesetzten Vorrichtung (30) und die Management-VLAN-Konfiguration auf einem Port der eingesetzten Vorrichtung (20) zu löschen;
die eingesetzte Vorrichtung (20) konfiguriert ist, ein nicht etikettiertes Paket aus der nicht eingesetzten Vorrichtung (30) mit der Management-VLAN-ID unter Verwendung der Management-VLAN-ID zu etikettierten und das Paket dem Einsatzserver (10) zur Verfügung zu stellen; und nachdem die Konfigurationsdaten auf der nicht eingesetzten Vorrichtung (30) aktiviert worden sind, die Anweisung von dem Einsatzserver (10) zu empfangen und die Standard-VLAN-Konfiguration auf dem Port zu löschen; und
die nicht eingesetzte Vorrichtung (30) konfiguriert ist, die temporäre Management-IP-Adresse von dem Einsatzserver (10) zu erhalten; einen VLAN-basierten Standard-Einsatzwartungskanal basierend auf der temporären Management-IP-Adresse aufzubauen; die temporäre Management-IP-Adresse zu verwenden, um die Konfigurationsdaten von dem Einsatzserver (10) zu erhalten und die Konfigurationsdaten auf der nicht eingesetzten Vorrichtung (30) zu aktivieren; und nachdem die Konfigurationsdaten aktiviert worden sind, die Anweisung von dem Einsatzserver (10) zu empfangen und die Standard-VLAN-Konfiguration auf ihrem Port zu löschen.

11. System nach Anspruch 10, wobei
der Einsatzserver (10) ferner konfiguriert ist, Konfigurationsdaten, die der nicht eingesetzten Vorrichtung (30) entsprechen, zu erzeugen.

12. System nach Anspruch 11, wobei
der Einsatzserver (10) konfiguriert ist, eine erste Zuordnung zwischen einem physikalischen Ort und Konfigurationsdaten der nicht eingesetzten Vorrichtung (30) aus Netzplanungsdaten zu erhalten; eine zweite Zuordnung zwischen einem physikalischen Einsatzort und einer Kennung der nicht eingesetzten Vorrichtung (30) aus Daten auf einem Einsatzstandort zu erhalten; und die erste Zuordnung und die zweite Zuordnung zu integrieren, um eine dritte Zuordnung zu erzeugen, die den physikalischen Einsatzort, die Kennung der nicht eingesetzten Vorrichtung (30) und die Konfigurationsdaten der nicht eingesetzten Vorrichtung (30) umfasst.

13. System nach einem der Ansprüche 10 bis 12, wobei
der Einsatzserver (10) konfiguriert ist, eine periodische Löschanweisung zu der nicht eingesetzten Vorrichtung (30) und der eingesetzten Vorrichtung (20) zu liefern, um die nicht eingesetzte Vorrichtung (30) und die eingesetzte Vorrichtung (20) anzuweisen, gleichzeitig die Standard-VLAN-Konfiguration auf dem Port der nicht eingesetzten Vorrichtung und die Management-VLAN-Konfiguration auf dem Port der eingesetzten Vorrichtung zu löschen, wenn eine voreingestellte Zeit erreicht ist.

## Revendications

1. Procédé pour déployer un dispositif non-déployé (30) dans un réseau de couche 2 comprenant les étapes suivantes :
définir (S201), par l'intermédiaire d'un serveur de déploiement (10), un identifiant de réseau de zone locale virtuelle de port, VLAN ID, d'un dispositif déployé (20) connecté au dispositif non-déployé (30) à un ID VLAN de gestion, où le dispositif déployé (20) est configuré pour étiqueter, avec l'ID VLAN de gestion, un paquet non étiqueté provenant du dispositif non-déployé (30) au moyen de l'ID VLAN de gestion, et fournir le paquet au serveur de déploiement (10) ;
sur la base d'une demande du dispositif non-déployé (30), délivrer (S202), par l'intermédiaire du serveur de déploiement (10), une adresse IP de gestion temporaire pour le dispositif non-déployé (30) en passant à travers le dispositif déployé (20) de manière à ce que le dispositif non-déployé (30) établisse un canal de maintenance de déploiement basé sur un VLAN par défaut sur la base de l'adresse IP de gestion temporaire ;
utiliser (S203), par l'intermédiaire du serveur de déploiement (10), l'adresse de protocole Internet, IP, de gestion temporaire pour délivrer des données de configuration correspondant au dispositif non-déployé (30) en passant à travers le dispositif déployé (20) de manière à ce que les données de configuration soient activées sur le dispositif non-déployé (30) ; et
délivrer (S204), par l'intermédiaire du serveur de déploiement (10), une instruction au dispositif déployé (20) et au dispositif non-déployé (30) pour supprimer la configuration VLAN par défaut sur un port du dispositif non-déployé (30) et une configuration VLAN de gestion sur un port du dispositif déployé (20).

2. Procédé selon la revendication 1, comprenant en outre l'étape suivante : générer, sur le serveur de déploiement (10), des données de configuration correspondant au dispositif non-déployé (30).

3. Procédé selon la revendication 2, dans lequel la génération, sur le serveur de déploiement (10), des données de configuration correspondant au dispositif non-déployé (30) comprend les étapes suivantes :
obtenir (S301), par l'intermédiaire du serveur de déploiement (10), un premier mappage entre un emplacement physique et des données de configuration du dispositif non-déployé (30) à partir de données de planification de réseau ;
obtenir (S302), par l'intermédiaire du serveur de déploiement (10), un deuxième mappage entre un emplacement physique d'installation et un identifiant du dispositif non-déployé (30) à partir des données sur un site d'installation ; et
intégrer (S303), par l'intermédiaire du serveur de déploiement (10), le premier mappage et le deuxième mappage pour générer un troisième mappage comprenant l'emplacement physique d'installation, l'identifiant du dispositif non-déployé (30), et les données de configuration du dispositif non-déployé (30).

4. Procédé selon l'une quelconque des revendications 1 à 3, dans lequel la délivrance (S204), par l'intermédiaire du serveur de déploiement (10), d'une instruction au dispositif déployé (20) et au dispositif non-déployé (30) afin de supprimer une configuration VLAN par défaut sur un port du dispositif non-déployé (30) et une configuration VLAN de gestion sur un port du dispositif déployé (20) comprend l'étape suivante :
délivrer, par l'intermédiaire du serveur de déploiement (10), une instruction de suppression périodique pour donner instruction au dispositif non-déployé (30) et au dispositif déployé (20) de supprimer de manière simultanée la configuration VLAN par défaut sur le port du dispositif non-déployé et la configuration VLAN de gestion sur le port du dispositif déployé lorsqu'un moment prédéfini arrive.

5. Serveur de déploiement (10) pour déployer un dispositif non-déployé (30) dans un réseau de couche 2, comprenant :
une unité de définition (501), configurée pour définir un identifiant de réseau de zone locale virtuelle de port, VLAN ID, d'un dispositif déployé (20) connecté au dispositif non-déployé (30) à un ID VLAN de gestion, où le dispositif déployé (20) est configuré pour étiqueter, avec l'ID VLAN de gestion, un paquet non-étiqueté provenant du dispositif non-déployé (30) au moyen de l'ID VLAN de gestion, et délivrer le paquet au serveur de déploiement (10) ;
une unité d'attribution d'adresse IP (502), configurée pour : sur la base d'une demande du dispositif non-déployé (30), délivrer une adresse IP de gestion temporaire pour le dispositif non-déployé (30) en passant à travers le dispositif déployé (20) de manière à ce que le dispositif non-déployé (30) établisse un canal de maintenance de déploiement basé sur un VLAN par défaut sur la base de l'adresse de protocole Internet, IP, de gestion temporaire ;
une unité de délivrance de données de configuration (503), configurée pour utiliser l'adresse IP de gestion temporaire pour délivrer des données de configuration correspondant au dispositif non-déployé (30) en passant à travers le dispositif déployé (20) de manière à ce que les données de configuration soient activées sur le dispositif non-déployé (30) ; et
une unité de suppression de configuration de port (504), configurée pour délivrer une instruction au dispositif déployé (20) et au dispositif non-déployé (30) pour supprimer une configuration VLAN par défaut sur un port du dispositif non-déployé (30) et une configuration VLAN de gestion sur un port du dispositif déployé (20).

6. Serveur de déploiement selon la revendication 5, comprenant en outre :
une unité de génération de données de configuration (505), configurée pour générer, sur le serveur de déploiement (10), des données de configuration correspondant au dispositif non-déployé (30).

7. Serveur de déploiement selon la revendication 6, dans lequel l'unité de génération de données de configuration (505) comprend :
une première unité de génération de mappage (601), configurée pour obtenir un premier mappage entre un emplacement physique et des données de configuration du dispositif non-déployé (30) à partir des données de planification de réseau ;
une deuxième unité de génération de mappage (603), configurée pour obtenir un deuxième mappage entre un emplacement physique d'installation et un identifiant du dispositif non-déployé (30) à partir des données sur un site d'installation ; et
une troisième unité de génération de mappage (602), configurée pour intégrer le premier mappage et le deuxième mappage pour générer un troisième mappage comprenant l'emplacement physique d'installation, l'identifiant du dispositif non-déployé (30), et les données de configuration du dispositif non-déployé (30).

8. Serveur de déploiement selon l'une quelconque des revendications 5 à 7, dans lequel :
l'unité de suppression de configuration de port (504) est configurée pour délivrer une instruction de suppression périodique au dispositif non-déployé (30) et au dispositif déployé (20) afin de donner pour instruction au dispositif non-déployé (30) et au dispositif déployé (20) de supprimer de manière simultanée la configuration VLAN par défaut sur le port du dispositif non-déployé et la configuration VLAN de gestion sur le port du dispositif déployé lorsqu'un moment prédéfini arrive.

9. Serveur de déploiement selon la revendication 5, dans lequel :
l'unité d'attribution d'adresse IP (502) est un serveur DHCP, et l'unité de délivrance de données de configuration (503) est un serveur TFTP.

10. Système pour déployer un dispositif non-déployé (30) dans un réseau de couche 2, comprenant : un serveur de déploiement (10), le dispositif non-déployé (30), et un dispositif déployé (20) ; où le dispositif déployé (20) est connecté au dispositif non-déployé (30) et est connecté au serveur de déploiement (10) sur un réseau ;
le serveur de déploiement (10) est configuré pour définir un identifiant de réseau de zone locale virtuelle de port, ID VLAN, du dispositif déployé (20) connecté au dispositif non-déployé (30) à un ID VLAN de gestion ; sur la base d'une demande du dispositif non-déployé (30), fournir une adresse de protocole Internet, IP, de gestion temporaire pour le dispositif non-déployé (30) en passant à travers le dispositif déployé (20) ; utiliser l'adresse IP de gestion temporaire pour délivrer des données de configuration correspondant au dispositif non-déployé (30) en passant à travers le dispositif déployé (20) ; après que les données de configuration ont été activées sur le dispositif non-déployé (30), délivrer une instruction au dispositif déployé (20) et au dispositif non-déployé (30) pour supprimer une configuration VLAN par défaut sur un port du dispositif non-déployé (30) et une configuration VLAN de gestion sur un port du dispositif déployé (20) ;
le dispositif déployé (20) est configuré pour étiqueter, avec l'ID VLAN de gestion, un paquet non-étiqueté provenant du dispositif non-déployé (30) au moyen de l'ID VLAN de gestion, et délivrer le paquet au serveur de déploiement (10) ; et après que les données de configuration ont été activées sur le dispositif non-déployé (30), recevoir l'instruction du serveur de déploiement (10) et supprimer la configuration VLAN par défaut sur le port ; et
le dispositif non-déployé (30) est configuré pour obtenir l'adresse IP de gestion temporaire du serveur de déploiement (10), établir un canal de maintenance de déploiement basé sur un VLAN par défaut sur la base de l'adresse IP de gestion temporaire, utiliser l'adresse IP de gestion temporaire pour obtenir les données de configuration à partir du serveur de déploiement (10) et activer les données de configuration sur le dispositif non-déployé (30), et après que les données de configuration ont été activées, recevoir l'instruction depuis le serveur de déploiement (10) et supprimer la configuration VLAN par défaut sur son port.

11. Système selon la revendication 10, dans lequel :
le serveur de déploiement (10) est en outre configuré pour générer des données de configuration correspondant au dispositif non-déployé (30).

12. Système selon la revendication 11, dans lequel :
le serveur de déploiement (10) est configuré pour obtenir un premier mappage entre un emplacement physique et des données de configuration du dispositif non-déployé (30) à partir des données de planification de réseau ; obtenir un deuxième mappage entre un emplacement physique d'installation et un identifiant du dispositif non-déployé (30) à partir des données sur un site d'installation ; et intégrer le premier mappage et le deuxième mappage pour générer un troisième mappage comprenant l'emplacement physique d'installation, l'identifiant du dispositif non-déployé (30), et les données de configuration du dispositif non-déployé (30).

13. Système selon l'une quelconque des revendications 10 à 12, dans lequel :
le serveur de déploiement (10) est configuré pour délivrer une instruction de suppression périodique au dispositif non-déployé (30) et au dispositif déployé (20) afin de donner pour instruction au dispositif non-déployé (30) et au dispositif déployé (20) de supprimer de manière simultanée la configuration VLAN par défaut sur le port du dispositif non-déployé et la configuration VLAN de gestion sur le port du dispositif déployé lorsqu'un moment prédéfini arrive.
